# NEUE EUROPÄISCHE PATENTSCHRIFT

(11) **EP 0 252 208 B2**
(45) Veröffentlichungstag und Bekanntmachung des Hinweises auf die Entscheidung über den Einspruch: **11.08.1993**
(45) Hinweis auf die Patenterteilung: 24.05.1989
(21) Anmeldenummer: 87102032.7
(22) Anmeldetag: 13.02.1987
(51) Int. Cl.: F15B 15/14, F16J 7/00

(54) **Fluidbetätigter Zylinder**
Pressure fluid driven cylinder
Cylindre actionné par fluide sous pression

(30) Priorität: 09.07.1986 DE 3623143
(43) Veröffentlichungstag der Anmeldung: 13.01.1988
(73) Patentinhaber: Leibfried Maschinenbau GmbH, D-71083 Herrenberg (DE)
(72) Erfinder: Lehle, Robert Dipl.-Ing., D-7033 Herrenberg (DE)
(74) Vertreter: Leyh, Hans, Dr.-Ing.

(56) Entgegenhaltungen:
- DE-A- 3 426 997
- DE-B- 2 016 924
- DE-U- 8 618 385
- FR-A- 2 522 083
- US-A- 2 451 089
- US-A- 3 147 671
- US-A- 3 729 219
- US-A- 4 342 634
- PATENT ABSTRACTS OF JAPAN, Band 4, Nr. 139 (M-34)[56], 30. September 1980; & JP - A - 55 94008 (KIYATAPIRAA MITSUBISHI) 17.07.1980

## Beschreibung

Die Erfindung betrifft einen fluidbetätigten Zylinder, insbesondere Druckluftzylinder, mit einem zylindrischen Gehäuse, einem Boden, einem Deckel, einer Kolbenstange und einem auf dieser sitzenden Kolben, wobei das Gehäuse so ausgeführt ist, daß durch Reduzierung seiner axialen Länge der Hub des Zylinders auf eine gewünschte Größe einstellbar ist.

Zylinder der vorgenannten Art werden z.B. eingesetzt, um einen Gegenstand oder eine Vorrichtung zu verschieben, zu verschwenken oder umzuschalten. Bedingt durch die zahlreichen unterschiedlichen Anwendungsmöglichkeiten werden unterschiedliche Hubgrößen verlangt, wobei häufig der endgültige Hub erst an Ort und Stelle beim Einbau des Zylinders bestimmt und festgelegt werden kann.

Aus der Deutschen Offenlegungsschrift Nr. 3 426 997 ist nun ein Zylinder für eine Hubkolbenmaschine bekannt, dessen Hub durch Auswechseln des Gehäuses und der Kolbenstange auf gewünschte Länge einstellbar ist.

Aus der Japanischen Patentanmeldung 5 594 008 ist ein hydraulischer Zylinder bekannt, bei dem auf die Kolbenstange außerhalb des Zylinders Distanzbüchsen unterschiedlicher Länge aufsetzbar sind, wodurch ebenfalls die Hublänge eingestellt werden kann.

Aus der Japanischen Patentanmeldung 5 594 009 ist es schließlich bekannt, eine Feineinstellung des Hubes mittels eines Hilfszylinders zu bewirken.

Bei keiner dieser Entgegenhaltungen wird jedoch die Länge ein und derselben Kolbenstange und ein und derselben zylindrischen Gehäuses verändert.

Der Erfindung liegt daher die Aufgabe zugrunde, einen Zylinder der eingangs genannten Art so weiterzubilden, daß sein Hub an beliebige vom Känfer gewünsche Werte leicht und schnell anpaßbar ist.

Nach der Erfindung wird diese Aufgabe durch die kennzeichnenden Merkmale des Anspruchs 1 gelöst.

Weitere Merkmale der Erfindung ergeben sich aus den Unteransprüchen.

Eine beispielsweise Ausführungsform der Erfindung wird nachfolgend anhand der Zeichnung erläutert, in der
Fig. 1 schematisch im Schnitt einen Zylinder bisheriger Bauart zeigt.
Fig. 2 zeigt schematisch im Schnitt in auseinandergezogener Darstellung einen erfindungsgemäßen Zylinder.

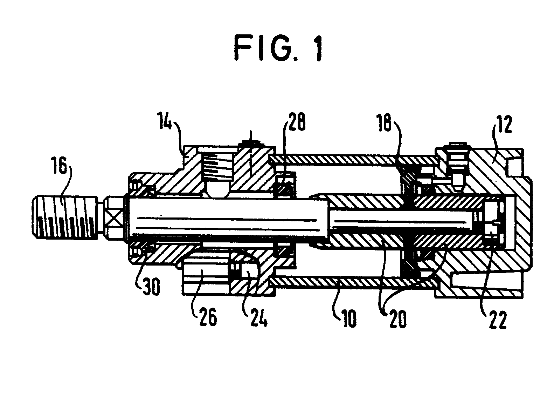

Der in Fig. 1 dargestellte Zylinder nach dem Stand der Technik besteht aus einem Gehäuse 10, einem Boden 12, einem Deckel 14, einer im Gehäuse verschiebbar angeordneten Kolbenstange 16, auf der ein Kolben 18 angeordnet ist, der mittels Büchsen 20 axial auf der Kolbenstange festgelegt und gehalten ist. Durch eine auf das eine Ende der Kolbenstange 16 geschraubte Mutter 22 werden die Büchsen 20 und der zwischen ihnen angeordnete Kolben 18 gegen einen Bund der Kolbenstange angedrückt. Mittels Zugstangen 24 und Muttern 26 werden das Gehäuse 10, der Boden 12 und der Deckel 14 gegeneinander verspannt und zusammengehalten. Mittels Dichtungen 28, 30 ist die Kolbenstange abgedichtet.

Im Boden 12 und im Deckel 14 ist je ein nicht näher bezeichneter Anschluß für die Zufuhr und Abfuhr eines Druckmittels zur Beaufschlagung des Kolbens ausgebildet.

Ein nach Fig. 1 ausgebildeter Zylinder hat einen vorgegebenen, durch die Abmessungen der einzelnen Teile, insbesondere des Gehäuses 10 und der Kolbenstange 16 bestimmten Hub, der nicht veränderbar ist, weshalb ein solcher Zylinder nicht an andere gewünschte oder erforderliche Hubgrößen angepaßt werden kann.

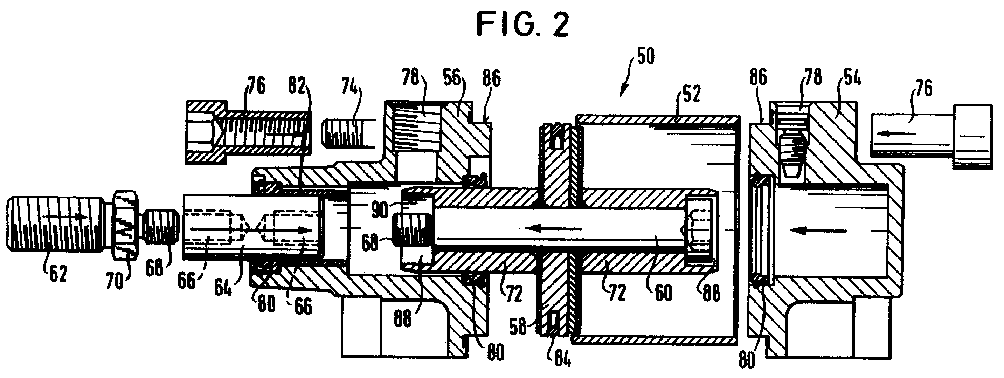

Der in Fig. 2 dargestellte erfindungsgemäße Zylinder 50 hat ein Gehäuse 52 in Form einer zylindrischen Hülse, einen Boden 54 und einen Deckel 56.

Das Gehäuse 52, der Boden 54 und der Deckel 56 werden durch Zuganker 74 und auf diese aufschraubbare Muttern 76 zusammengehalten und gegeneinander verspannt.

Im Innern des Gehäuses 52 ist eine Kolbenstange axial verschiebbar angeordnet, auf der ein Kolben 58 sitzt, der über im Boden 54 und im Deckel 56 ausgebildete Anschlüsse 78 mit einem Druckmittel, insbesondere mit Druckluft beaufschlagbar ist, derart, daß der Kolben und die mit ihm verbundene Kolbenstange eine axiale hin- und hergehende Bewegung ausführen kann.

Die Kolbenstange ist aus drei Teilen aufgebaut, die miteinander verbunden werden können.

Sie besteht aus einem inneren Abschnitt 60, der vorzugsweise in Form einer Inbus-Schraube ausgebildet ist, einem äußeren Abschnitt 62, der dazu dient, die Kolbenstange mit der durch den Zylinder 50 zu betätigenden Einrichtung zu verbinden, sowie einem Zwischenstück 64, durch welches der innere Abschnitt 60 und der äußere Abschnitt 62 miteinander verbunden werden.

Das Zwischenstück 64 ist zu diesem Zweck an seinen beiden Stirnseiten mit je einer axialen Gewindebohrung 66 versehen und entsprechend hat der innere Abschnitt 60 auf seiner dem Zwischenstück 64 zugewandten Seite einen Gewindestutzen 68 und ebenso hat der äußere Abschnitt 62 auf seiner dem Zwischenstück 64 zugewandten Seite einen Gewindestutzen 68, welche in die Gewindebohrungen 66 einschraubbar sind.

Die Kolbenstange wird somit zusammengebaut, indem die beiden Gewindestutzen 68 des inneren und des äußeren Abschnittes in die Gewindebohrungen 66 des Zwischenstückes 64 eingeschraubt werden, wobei zur Sicherung auf den Gewindegängen der Gewindestutzen 68 vor dem Einschrauben ein Klebstoff aufgebracht werden kann.

Der äußere Abschnitt 62 ist zum Zwecke des Einschraubens mit einem Schraubenkopf 70 versehen, während der innere Abschnitt 60, der in Form einer Inbus-Schraube ausgebildet ist, die die übliche Fassung für das Einsetzen eines Inbus-Schlüssels aufweist.

Auf dem inneren Abschnitt 60 sind zwei Büchsen 72 angeordnet, zwischen denen der Kolben 58 sitzt, und durch Einschrauben des inneren Abschnittes 60 in das Zwischenstück 64 werden die Büchsen 72 und damit der Kolben 58, gegen die in derZeichnung rechte Stirnseite des Zwischenstücks 64 angedrückt und damit der Kolben axial auf dem inneren Abschnitt 60 gehalten. Zwischen Boden bzw. Deckel einerseits und der Kolbenstange bzw. den Büchsen 72 andererseits sind Dichtungen 80 angeordnet und der Kolben 58 ist mit einer Kolbendichtung 84 versehen.

Das Zwischenstück 64 ist in einer im Deckel 56 eingebauten Führungsbüchse 82 verschiebbar gelagert.

Das Zwischenstück 64 ist nun eine einfache zylindrische Stange, und ebenso ist das Gehäuse 52 eine einfache zylindrische Hülse.

Um eine Anpassung an beliebige unterschiedliche gewünschte Hubgrößen zu ermöglichen, werden die einzelnen Teile des Zylinders vollständig fertigbearbeitet, außer dem zylindrischen Zwischenstück 64 und dem hohlzylindrischen Gehäuse 52. Diese beiden Teile werden auf eine Länge zugerichtet, die größer ist als den zu erwartenden oder den vom Verwender gewünschten oder vorgegebenen Hubgrößen entspricht.

Der in Fig. 2 dargestellte Zylinder 50 wird somit in Form eines Bausatzes geliefert, von welchem sämtliche Teile fertig bearbeitet sind, außer dem Zwischenstück 64 und dem hohlzylindrischen Gehäuse 52.

Der Verwender kann nun an Ort und Stelle die Längen des Zwischenstücks 64 und des Gehäuses 52 auf das für den gewünschten oder erforderlichen Hub des Zylinders erforderliche Maß zurichten. Ist dies geschehen, so werden in das Zwischenstück 64 noch die Gewindebohrungen 66 gebohrt, worauf die Kolbenstange zusammengebaut werden kann, indem die Stutzen 68 des inneren Abschnittes 60 und des äußeren Abschnittes 62 in diese Gewindebohrungen 66 des Zwischenstücks 64 eingeschraubt werden. Der Zylinder wird zusammengebaut, indem das Gehäuse 52, in das der Kolben 58 mit der Kolbenstange vorher eingeschoben worden ist, auf am Boden 54 und am Deckel 56 ausgebildete Schultern 86 aufgeschoben wird, und Boden, Gehäuse und Deckel mittels der Zuganker 74 und der Muttern 76 zusammengeschraubt und gegeneinander verspannt werden.

Die Länge der Zuganker 74 hängt ebenfalls von der gewünschten Hubgröße ab, Zuganker dieser Art, die nur aus einem zylindrischen Stab mit einem Gewinde an jedem Ende bestehen, sind aber in nahezu allen Längen käuflich verfügbar, es kann aber auch vorgesehen sein, die Zuganker 74, ebenso wie das Zwischenstück 64 und das Gehäuse 52 in einer Länge vorzubereiten und mitzuliefern, die größer ist als dem voraussichtlichen Hub entspricht, so daß der spätere Verwender des Zylinders auch die Zuganker auf das erforderliche Maß bringt und auf jedes Ende ein Gewinde schneidet.

Es kann ferner vorgesehen sein, daß das Zwischenstück 64 an einer seiner beiden Stirnseiten bereits mit einer Gewindebohrung 66 versehen ist, so daß der Verwender des Zylinders 50 das Zwischenstück 64 nur auf die gewünschte axiale Länge zurichtet, beispielsweise durch Abdrehen der Stirnseite, die nicht mit einer Gewindebohrung versehen ist, und dann die andere Gewindebohrung anbringt. Die Zuganker 74 können in entsprechenderweise vorbereitet werden.

Die Anpassung des erfindungsgemäßen Zylinders an beliebige gewünschte Hubgrößen kann in einer normalen Werkstatt von jedem Mechaniker schnell und genau ausgeführt werden, da, wie vorstehend erläutert, nur das Zwischenstück 64 und das Gehäuse 52 auf die erforderliche Länge abgedreht und im Zwischenstück 64 noch die Gewindebohrungen 66 gebohrt werden müssen.

Die beiden Büchsen 72 haben jeweils an einem ihrer Enden eine zylindrische Ausnehmung 88, wobei in der Ausnehmung 88 der in Fig. 2 rechten Büchse der Kopf der den inneren Abschnitt 60 bildenden Inbus-Schraube untergebracht ist. Die Ausnehmung 88 der in Fig. 2 linken Büchse 72 hingegen hat eine zylindrische Paßfläche 90, welche beim Zusammenbau der Kolbenstange über die zylindrische Außenfläche des Zwischenstücks 64 greift, derart, daß die Büchse 72 und damit der innere Abschnitt 60 der Kolbenstange zentrisch auf dem Zwischenstück 64, z.B. mit Gleitsitz oder Schiebesitz, geführt ist.

## Patentansprüche

1. Fluidbetätigter Zylinder (50), insbesondere Druckluftzylinder, mit einem zylindrischen Gehäuse (52), einem Boden (54), einem Deckel (56), einer Kolbenstange (60,62,64) und einem auf dieser sitzenden Kolben (53), wobei das Gehäuse (52) und die Kolbenstange so ausgeführt sind, daß durch Reduzierung ihrer axialen Länge der Hub des Zylinders auf eine gewünschte Größe einstellbar ist, dadurch gekennzeichnet, daß der Zylinder (50) als Bausatz ausgebildet ist, wobei die Kolbenstange dreiteilig aus einem inneren Abschnitt (60), auf dem der Kolben (58) sitzt, einem äußeren Abschnitt (62) für die Verbindung mit einer von dem Zylinder (50) zu betätigenden Einrichtung, und einem diese beiden Abschnitte verbindenden, als einfache zylindrische Stange ausgebildeten Zwischenstück (64) gebildet ist, und daß alle Teile fertigbearbeitet sind, außer dem Gehäuse (52) und dem Zwischenstück (64), wobei das Gehäuse (52) und das Zwischenstück (64) zur Anpassung an unterschiedliche Hubgrößen an Ort und Stelle durch den Verwender auf entsprechende reduzierte Längen zurichtbar sind.

2. Zylinder nach Anspruch 1, dadurch gekennzeichnet, daß auf dem inneren Abschnitt (60) der Kolbenstange zwei Büchsen (72) sitzen, zwischen denen der Kolben (58) axial gehalten ist, und daß wenigstens die auf der Seite des Zwischenstücks (64) angeordnete Büchse (72) auf ihrer dem Zwischenstück (64) zugewandten Stirnseite mit einer zylindrischen Ausnehmung (88) versehen ist, welche eine zylindrische Paßfläche (90) hat, die beim Zusammenbau der Kolbenstange auf der zylindrischen Außenfläche des Zwischenstückes (64) geführt ist.

3. Zylinder nach Anspruch 1 oder 2, dadurch gekennzeichnet, daß das Zwischenstück (64) auf beiden Stirnseiten mit je einer Gewindebohrung (66) für die Verbindung mit dem inneren und mit dem äußeren Abschnitt (60, 62) versehen ist, die ihrerseits entsprechende Gewindestutzen (68) aufweisen.

4. Zylinder nach einem der vorhergehenden Ansprüche, dadurch gekennzeichnet, daß der innere Abschnitt (60) der Kolbenstange in Form einer Inbus-Schraube ausgebildet ist.

## Claims

1. Fluid driven cylinder (50), especially pressure fluid driven cylinder comprising a cylindrical housing (52), a base (54), a cover (56), a piston rod (60, 62, 64) and a piston (53) situated at the latter and wherein the housing (52) and the piston rod will be executed in a manner to allow a setting of the axial course of the cylinder by a reduction of its axial length, caracterized in that the cylinder (50) is conceived as kit and the piston rod of three parts comprises an inner section (60) at which is situated the piston (58), with an outer section (62) for the connection with an equipment to actuate by the cylinder (50) and an intermediate section (64) as simple cylindrical rod to link the two sections and that all sections are completely machined, with exception of the housing (52) and the intermediate section (64) foradaptation atdif- ferent course dimensions at site by the user and to corresponding reduced lengths.

2. Pressure fluid driven cylinder according to claim 1, characterized in that upon the inner section (60) of the piston rod are situated two bushings (72) between which the rod (58) will be maintained axially and that at least the bushing (72) situated on the side of the intermediate section (64) comprises, at the frontal side to the intermediate section (64), a cylindrical recess (88) comprising a cylindrical fitting surface (90) guided onto the cylindrical outer surface of the intermediate section (64) during the mounting of the piston rod.

3. Pressure fluid driven cylinder according to claim 1 or 2, characterized in that the intermediate section (64) comprises at both frontal sections an adequate screw thread (66) used forthe linkwith the inner and outer section (60, 62), threads fitted with the corresponding screw necks (68).

4. Pressure fluid driven cylinder according to one of the above mentioned claims, characterized in that the inner section (60) of the piston rod presents the shape of a hexagon socket screw.

## Revendications

1. Cylindre actionné par fluide (50), notamment cylindre actionné par fluide sous pression, comportant un boîtier cylindrique (52), un fond (54), un couvercle (56), une tige de piston (60, 62, 64) et un piston (53) fixé sur cette dernière, cylindre dont le boîtier (52) et la tige de piston sont exécutés de manière à ce que par réduction de sa longueur axiale la course du piston soit réglable sur une grandeur demandée, caractérisé en ce que le cylindre (50) est conçu sous forme d'un jeu de montage où la tige de piston à trois sections est formée d'une section interne (60), sur laquelle se trouve le piston (58), d'une section externe (62) pour la liaison avec un équipement à actionner par le cylindre (50) et une pièce intermédiaire (64) sous forme d'une tige cylindrique simple reliant ces deux sections et que toutes les les pièces sont traitées définitivement, sauf le boîtier (52) et la pièce intermédiaire (64), où le boîtier (52) et la pièce intermédiaire (64) sont adaptables par l'utilisateur sur le site aux dimensions de course et aux longueurs réduites correspondantes.

2. Cylindre selon la revendication 1, caractérisé en ce que sur la section interne (60) de la tige de position se trouvent aménagées deux douilles (72) entre lesquelles est maintenu le piston (58) de manière axiale et qu'au moins la douille (72) se trouvant sur un côté de la pièce intermédiaire (64) est munie sur leur côté frontal, à la pièce intermédiaire, d'un évidement cylindrique (88) présentant une surface d'adaptation cylindrique (90) qui, lors de l'assemblage de la tige de piston, est guidée sur la surface externe cylindrique de la pièce intermédiaire (64).

3. Cylindre selon la revendication 1 ou 2, caractérisé en ce que la pièce intermédiaire (64) est munie sur les côtés avants d'un perçage fileté (66) pour la liaison avec la section interne et externe (60, 62) perçages comportant eux-aussi les manchons filetés correspondants (68).

4. Cylindre selon une des revendications précitées, caractérisé en ce que la section interne (60) de la tige de piston est conçue sous forme d'un vis à six pans creux.
